# EUROPEAN PATENT SPECIFICATION

(11) **EP 2 409 312 B1**
(45) Date of publication and mention of the grant of the patent: **01.10.2014**
(21) Application number: 10777379.8
(22) Date of filing: 20.05.2010
(51) Int. Cl.: H01H 85/04, H01H 85/055, H01H 85/36, H01H 85/18, H01M 10/00, H01M 2/34

(54) **CURRENT FUSE DEVICE AND BATTERY ASSEMBLY COMPRISING THE SAME**
STROMSICHERUNGSGERÄT UND BATTERIEANORDNUNG DAMIT
DISPOSITIF DE FUSIBLE POUR COURANT ET ENSEMBLE BATTERIE LE COMPRENANT

(30) Priority: 21.05.2009 CN 200920132048 U; 05.06.2009 CN 200920132457 U
(43) Date of publication of application: 25.01.2012
(73) Proprietor: BYD Company Limited, Shenzhen 518118 (CN)
(72) Inventor: TONG, Zhiwei, Shenzhen Guangdong 518118 (CN); ZHU, Jianhua, Shenzhen Guangdong 518118 (CN); ZHENG, Weixin, Shenzhen Guangdong 518118 (CN); HU, Hao, Shenzhen Guangdong 518118 (CN)
(74) Representative: HOFFMANN EITLE
(86) International application number: PCT/CN2010/073016
(87) International publication number: WO 2010/133176

(56) References cited:
- CN-A- 101 373 682
- CN-U- 201 438 449
- CN-Y- 201 430 115
- DD-A1- 125 456
- DD-A1- 125 456
- DE-A1- 2 029 187
- US-A- 2 300 142
- US-A- 5 929 739

## Description

### BACKGROUND OF THE DISCLOSURE

### TECHNICAL FIELD

The present disclosure relates safety of low-medium voltage electric system, more particularly to a current fuse device, further more particularly to a battery assembly comprising the same.

### RELATED ART

Power batteries for energy storage are one of the most important parts of electrical vehicles. However, safety of the power batteries always renders an urgent problem, especially of short circuit protection thereof.

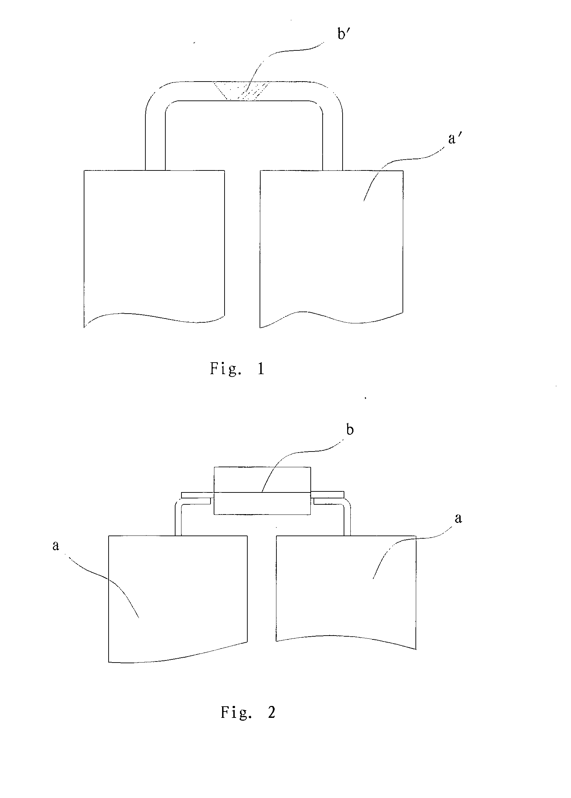

Referring to Fig. 1, to achieve short circuit protection for the power batteries, the single battery a' is electrically connected to another single battery via a fuse b' by tab butt welding or tab lapping welding in the art. When there occurs short circuiting between the single batteries, the fuse b' may be melted by the instant current, and melts will fall off due to gravity, thus achieving short circuit protection for the power batteries.

However, such a solution may have the following shortcomings: the disconnection of the fuse structure caused by the narrow welding seam is not reliable; and the fuse structure may be reconnected when the battery shell is softened to be deformed toward each other so that the batteries may be connected with each other again which may deteriorate safety performance of the power batteries.

### SUMMARY

In viewing thereof, the present disclosure is directed to solve at least one of the problems existing in the prior art. Accordingly, a novel current fuse device may be needed to be provided with enhanced fusing performance. Further, a battery assembly may be needed to enhance battery safety performance.

The object of the invention is achieved by the subject-matter of the independent claims. Advantageous embodiments are defined in the dependent claims. Further examples, also called "embodiments" or "aspects" in the following, are provided for facilitating the understanding of the invention.

According to an aspect of the disclosure, a current fuse device may be provided. The current fuse device may comprise an insulating box having a cavity, a first conductor, a second conductor and at least an elastic member. The first conductor may be fixed by the insulating box with a first outer end projecting out of the insulating box and a first inner end in the cavity. The second conductor may be fixed by the insulating box with a second outer end projecting out of the insulating box and a second inner end provided in the cavity which may be opposed to the first inner end of the first conductor. The at least an elastic member may be provided on at least one of the first conductor and the second conductor inside the cavity forming electrical connection with the first and second outer ends simultaneously. The elastic member may have an elastic potential energy to break the electrical connection during short-circuiting.

In some embodiment, the electrical connection may be formed by welding, and an arc-extinguishing medium may be filled into the cavity.

In some embodiment, the at least an elastic member may be formed into a first conductive spring plate and a second conductive spring plate. An end of the first conductive spring plate may be fixed to and electrically connected with the first inner end. An end of the second conductive spring plate may be fixed to and electrically connected with the second inner end. The other ends of the first and second conductive spring plates may be connected together via welding spots. And at least one of the first conductive spring plate and the second conductive spring plate may have the elastic potential energy for breaking away from the welding spots during short-circuiting.

In another embodiment, a gap may be formed between the first inner end and the second inner end with the elastic member having a first end being fixed and a second end being provided in the gap which may form the electrical connection with the first inner end and the second inner end simultaneously.

According to another aspect of the disclosure, a battery assembly may be provided, which may comprise a plurality of single batteries. At least two of the single batteries may be electrically connected with each other via the current fuse device as described above.

According to the present disclosure, during short circuiting, because the instant current is very large, the heat thus generated may not be dissipated rapidly at the welding portion, thus the welding portion may be melted instantaneously or in a short time. And the elastic member may restore its shape via the elastic potential energy contained therein to overcome the surface tension and external resistant force, so that a high fusing reliability may be ensured accordingly.

Other variations, embodiments and features of the present disclosure will become evident from the following detailed description, drawings and claims.

### BRIEF DESCRIPTION OF THE DRAWINGS

These and other aspects and advantages of the disclosure will become apparent and more readily appreciated from the following descriptions taken in conjunction with the drawings in which:
Fig. 1 is a partial schematic view of a fuse structure between the single batteries in the prior art;
Fig. 2 is a partial schematic view of a fuse structure between the single batteries according to an embodiment of the present disclosure;
Fig. 3 is an exploded perspective view of a current fuse device according to a first embodiment of the present disclosure;
Fig. 4 is a schematic view of a second conductor and a conductive spring plate shown in Fig. 3;
Fig. 5 is a top view of a current fuse device according to a first embodiment of the present disclosure;
Fig. 6 is a section view along a line A-A shown in Fig. 5 under a normal condition;
Fig. 7 is a section view along a line A-A shown in Fig. 5 during short-circuiting;
Fig. 8 is a perspective view of a current fuse device according to a second embodiment of the present disclosure;
Fig. 9 is an exploded perspective view of the current fuse device shown in Fig. 8;
Fig. 10 is a top view of the current fuse device shown in Fig. 8;
Fig. 11 is a section view of the current fuse device along a line B-B shown in Fig. 8; and
Fig. 12 is a schematic view in which first and second conductors and a conductive spring plate shown in Fig. 11 are welded together.

### DETAILED DESCRIPTION OF EMBODIMENTS OF THE DISCLOSURE

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

According to the present disclosure, a current fuse device may be provided. The current fuse device may comprise an insulating box having a cavity, a first conductor, a second conductor and at least an elastic member. The first conductor may be fixed by the insulating box with a first outer end projecting out of the insulating box and a first inner end in the cavity. The second conductor may be fixed by the insulating box with a second outer end projecting out of the insulating box and a second inner end provided in the cavity which may be opposed to the first inner end of the first conductor. The at least an elastic member may be provided on at least one of the first conductor and the second conductor inside the cavity forming electrical connection with the first and second inner ends simultaneously. The elastic member may have an elastic potential energy to break the electrical connection during short-circuiting.

It should be noted that the first or second conductor of the current fuse device may be connected to a battery respectively, or the first or second conductor may be connected to a battery whereas the other thereof may be connected to other device for electrical conduction, all these conditions should be construed to be covered by the present disclosure.

Further, it should be noted that the terminology of "short-circuiting" may mean an instantaneous extreme large current occurred in the electric system or large current lasting for a time which may bring detrimental damage. And the meaning stated hereinabove and equivalents thereof may be fallen within scope of the present disclosure.

For overcurrent protection, every current fuse device may have a responsive time and the responsive time is decreased with the current increasing. When the short-circuit current is relatively low, the breaking time may be tens of seconds, and during this process, the temperature is raised with the accumulation of heat reducing the dissipated heat, and when the temperature reaches the melting point, the fuse device breaks. As for instantaneous extreme large current, such as ten times of the rated current, the melting time is on the order of milliseconds, because the heat from the welding spots can not be dissipated timely which renders the fusing of the current fuse device immediately.

In some embodiments, the electrical connection may be formed by welding, and an arc-extinguishing medium may be filled into the cavity.

The embodiments of the present disclosure will be described in detail in combination with accompanying figures.

### FIRST EMBODIMENT

The conductive spring plates comprise a first conductive spring plate 31 and a second conductive spring plate 32. The first conductive spring plate 31 and the second conductive spring plate 32 may be placed in the cavity 10. An end of the first conductive spring plate 31 may be fixed and electrically connected to the first inner end 211. An end of the second conductive spring plate 32 may be fixed and electrically connected to the second inner end 221. The other ends of the first and second conductive spring plates 31, 32 may be connected together by pre-press welding forming welding spots. And at least one of the first conductive spring plate 31 and the second conductive spring plate 32 may have an elastic potential energy for breaking away from the welding spots during short-circuiting.

Herein, the terminology of pre-press welding means that welding may be performed with forces applying on the first and second conductive spring plates 31, 32 respectively to overcome elastic forces thereof so that the first and second conductive spring plates may be welded together. Particularly, according to an embodiment of the disclosure, the welding may be soldering.

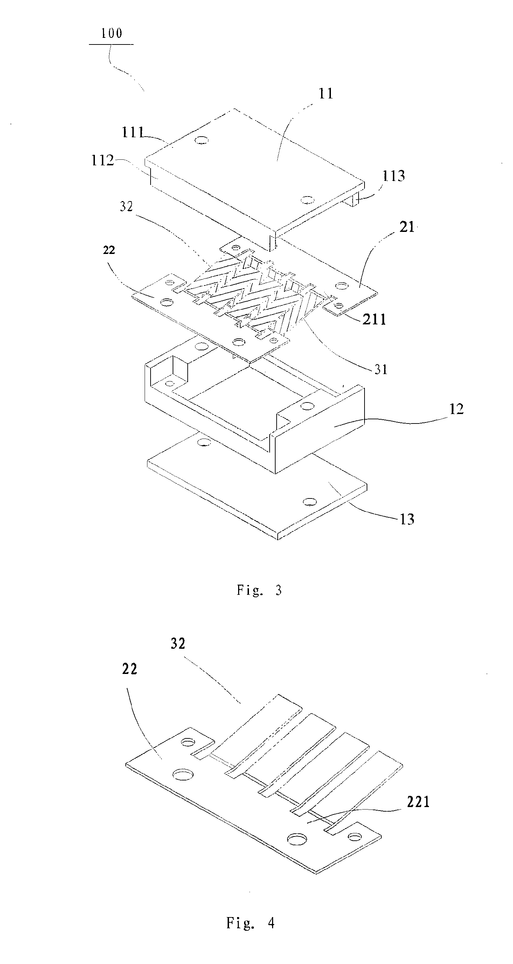

As shown in Fig. 3, the current fuse device 100 may comprise an insulating box 1 having a cavity 10, a first conductor 21, a second conductor 22, a first conductive spring plate 31, and a second conductive spring plate 32. The first conductor 21 and the second conductor 22 may be fixed to the insulating box 1. The first conductor 21 may have a first outer end 212 projecting out of the insulating box 1 and a first inner end 211 in the cavity 10. And the second conductor 22 may have a second outer end 222 projecting out of the insulating box 1 and a second inner end 221 in the cavity 10. The first and second conductive spring plates 31, 32 may be placed in the cavity 10. An end of the first conductive spring plate 31 may be fixed and electrically connected to the first inner end 211. An end of the second conductive spring plate 32 may be fixed and electrically connected to the second inner end 221. The other ends of the first and second conductive spring plates 31, 32 may be connected together by pre-press welding by forming welding spots. And at least one of the first conductive spring plate 31 and the second conductive spring plate 32 may have an elastic potential energy for breaking away from the welding spots during short-circuiting.

Referring to Fig. 3, herein, the insulating box 1 may comprise a main body 12, an upper cover 11 and a lower cover 13. The upper cover 11 and lower cover 13 may be fixed on the main body 12 and enclosed together with the main body 12 to form the cavity 10. And the first and second conductors 21, 22 may project out of the upper cover 11 and the main body 12 and may be clamped thereby accordingly.

The upper cover 11 may be formed into a half-enclosure including an upper surface 111 and two sides 112, 113 extending downwardly from edges of the upper surface 111. The main body 12 may be covered by the upper surface 111, and the first conductor 21 and the second conductor 22 may be clamped by the both sides 112, 113 and the main body 12. The main body 12 may be of a hollowed structure having two grooves on both sides thereof for fixing the first and second conductors 21, 22. Threaded holes on the main body 12, the upper cover 11 and the lower cover 13 may be used for connecting therebetween and fixing the first and second conductors 21, 22 on the main body 12 accordingly.

The insulating box 1 may be made from materials with high temperature resistance or corrosion resistance, for example ceramics, asbestos, or polytetrafluoroethylene, etc. Because of the insulating box 1, the first and second conductors 21, 22 may be fixed and shielded accordingly. And the connection and disconnection of the current fuse device 100 may be more reliable.

Due to the independent design of the current fuse device, the rigidity of the insulating box may overcome the installing stress existed between the single batteries, preventing ineffective fusing caused by accidental events such as displacements of tabs due to high temperature softening etc.

According to an embodiment of the disclosure, the first conductor 21 and the first conductive spring plate 31 may be integrally formed. And the second conductor 22 and the second conductive spring plate 32 may be integrally formed. The materials of the integrally formed structures may be the same or different from each other.

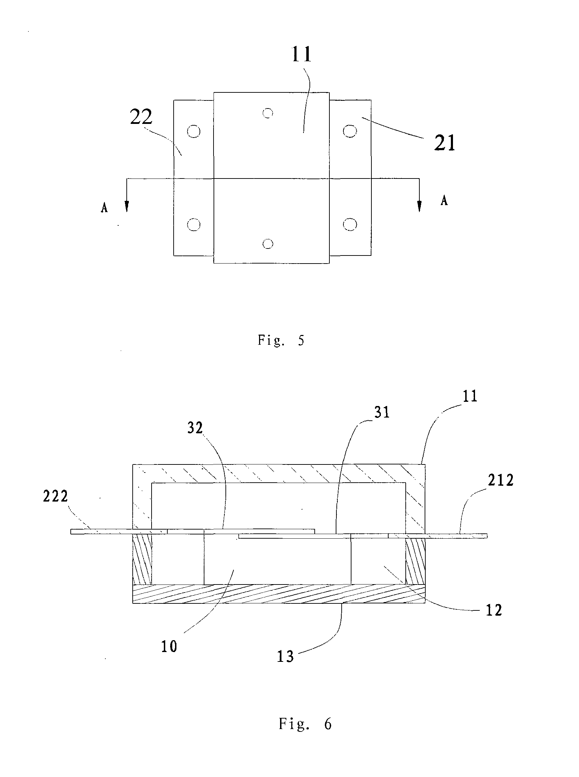

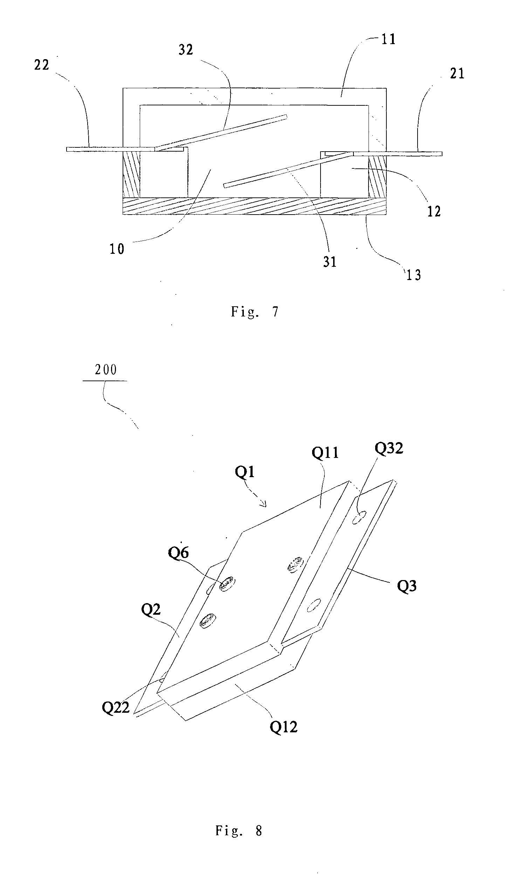

Referring to Fig. 7, under natural state without external force being applied, the first conductive spring plate 31 may be bended downwardly, and the second conductive spring plate 32 may be bended upwardly which may be parallel to the first conductive spring plate 31. During welding, the first and second conductive spring plates 31, 32 may be pressed together on the planes of the first and second conductor 21, 22 respectively, which is shown in Fig. 6.

More particularly, both of the conductive spring plates 31, 32 may be bended. However, according to an embodiment of the disclosure, the conductive spring plate 31 or the conductive spring plate 32 may be bended to possess the elastic potential energy which may also break away from the electrical connection during short-circuiting. According to another embodiment of the disclosure, the conductive spring plates 31, 32 with flat shape which are not positioned in the same plane may be pressed and welded together so that the conductive spring plates 31, 32 may possess the elastic potential energy which may ensure the breaking of the electrical connection during short-circuiting.

The conductive spring plates 31, 32 may be of laminated structure. Particularly, each of the first and the second conductive spring plate 31, 32 may comprise at least two branch spring plates, and may have a comb-shaped structure as shown in Fig. 4.

The conductive spring plate may be made from elastic conductive materials such as beryllium bronze and phosphor bronze, or composite materials such as composite plates of elastic copper materials with pure copper/aluminum. Particularly, the conductive spring plates 31, 32 may be made from beryllium copper alloy, because of its excellent heat conductivity, electrical conductivity and elasticity and excellent creep resistance.

When the connection between the conductive spring plates 31, 32 may be broken, the instantaneous voltage between them may be very high and may cause the strong electrical arc accident which may cause a strong electrical arc discharge. Because the amount of the flammable gas generated during short-circuiting is larger than that generated under common conditions, the high temperature generated by the arc discharge may be enough to ignite the flammable gas, thus causing hidden safety problems. More particularly, an arc-extinguishing medium (not shown) which can avoid the electrical arc accident and protect the batteries may be filled into the cavity 10.

Particularly, the arc-extinguishing medium may be quartz sand which may be electronegative and has better heat conductivity and insulation performance. The branch structure of the conductive spring plates 31, 32, on one hand, can increase the resistance between the spring plates resulted from the reduced conductive area of the spring plates, and under large current, local temperature may rise rapidly, thus resulting in the instantaneous melting and disconnecting of the welding spots and reducing a response time of open circuit protection. On the other hand, it may reduce the resistance between the spring plates and the quartz sand resulted from smaller resistant area of the spring plates. And when the connection between the conductive spring plates 31, 32 may be broken, the quartz sand subjected to the pressure from the branch spring plates may easily flow through the gap between the adjacent branch spring plates and fill between the opposed conductive spring plates 31, 32, which may favor to promptly disperse the between the spring plates and the quartz sand and also may help to arc-extinguish timely.

Particularly, the first and second conductors 21, 22 may be of laminated structures and may be thicker than the conductive spring plates 31, 32. Because of the reduced conductive area of the conductive spring plates 31, 32, the thinner conductive spring plates may have larger resistance than the thicker conductors. Because of the increased conductive area of the current fuse device, the current fuse device 100 may have lower resistance. When the current is lower, the heating power is lower. Although the resistances of the spring plates are larger, due to the excellent heat conductivity of the spring plates, there is enough time to carry out the heat conduction and heat radiation on the space in the cavity or quartz sand, thus making the heat dispersing promptly. Therefore the temperature of the spring plates may be substantially the same as that of the current fuse device 100, so that it can be ensured that the current fuse device 100 can work properly and have a high efficient electrical connection under the common current conditions. During short-circuiting, due to the much larger current and larger resistance of the spring plates, a large amount of heat may be generated instantaneously which can not be dissipated promptly, and the heat capacity of the spring plates are very low, so that the melts of the welding spots may be reached in a very short time, the welding spots may be melted, and the spring plates may overcome the surface liquid tension and the external resistance of the melts under the elastic stress thereof to break, with strong reliability and short response time. Particularly, the resistance ratio between the conductive spring plates 31, 32 and the conductors 21, 22 may range from about 1.5 to about 2.5.

The current fuse device 100 may be of an independent structure which may increase the maneuverability of the production and maintenance.

The current fuse device 100 according to an embodiment of the disclosure and test thereof may be provided as following:
Each of conductors 21, 22 may be made from beryllium copper alloy having a conductive sectional size of about 40mmx2 mm, and each of the conductive spring plates 31, 32 may comprise four branched spring plates having an conductive sectional size of about 4 mm×0.5mm. The distance between the branched spring plates may be about 2 mm.

The total resistance of the current fuse device 100 may be about 0.1 to 0.2 milliohm. The resistance of the conductive spring plates (part) may be about 0.05 to 0.1 milliohm. And the resistances may be adjusted by changing the size and thickness of the conductors 21, 22 or conductive spring plates 31, 32. Under the condition of an overloading current of 350A, the current fuse device 100 may at least provide a safe time of about 15 minutes. And under the condition of an overloading current of 1000A, the breaking time of the current fuse device may be just of about 16 seconds. When two single batteries may be used for testing, the average current may be about 1023 A in the early 20 seconds during short-circuiting, so that the response time of the current fuse device 100 may meet the requirements of short-circuiting protection for a battery assembly as will be described hereinafter.

As described above, the short-circuit breaking reliability is high with arc-extinguishing function. And the response time for short-circuit protection is short. Further, the manufacturing cost is low which may be assembled rapidly with improved maintenance easiness.

The current fuse device 100 may be manufactured by following steps:
1) fixing the conductive spring plates 31, 32 onto the main body 12 using screws as shown in Fig. 3;
2) fixing the main body 12 on an aluminum welding support mated with the main body 12, and pressing the conductive spring plates 31, 32 flat into the shape as shown in Fig. 6, the aluminum may not be welded together with tin;
3) coating a solder paste uniformly into the gap of between the conductive spring plates 31, 32;
4) compacting and welding the conductive spring plates 31, 32; and
5) removing the aluminum support and then installing the upper and lower covers 11, 13 and filling quartz sand into the cavity 10 accordingly.

### SECOND EMBODIMENT

In the following, a second embodiment of the current fuse device 200 will be described with reference to Figs. 8-12. The first inner end of the conductor 21 and the second inner end of the conductor 22 have a gap between them; the first ends of the conductive spring plates may be fixed; and the second ends of the conductive spring plates may be pre-pressurized to extend into the gap and welded together with the first inner end of the conductor 21 and the second inner end of the conductor 22.

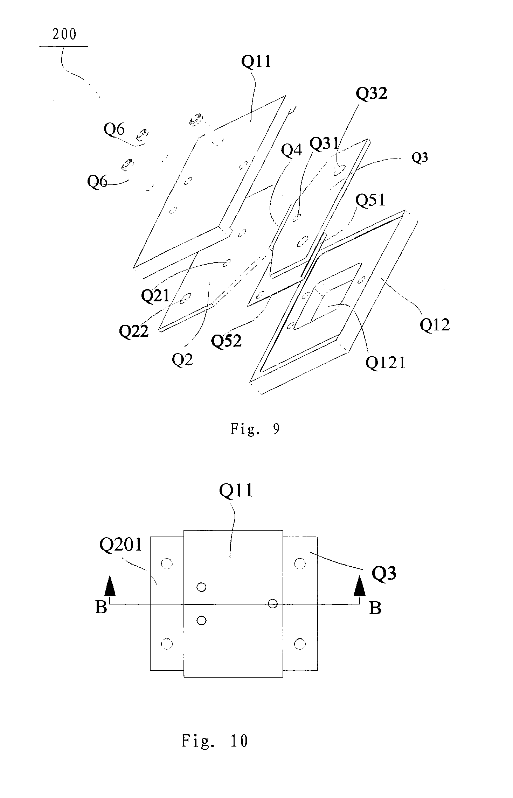

As shown in Fig. 8 and 9, the current fuse device 200 may comprise an insulating box Q1 having a cavity, a first conductor Q2, a second conductor Q3 and a conductive spring plate Q5. The first conductor Q2 may have a first outer end Q201 projecting out of the insulating box Q1 and a first inner end Q202 in the cavity, and the second conductor Q3 may have a second outer end Q301 out of the insulating box Q1 and a second inner end Q302 in the cavity. The first conductor Q2 and the second conductor Q3 may have a gap Q4 therebetween. A first end of the conductive spring plate Q5 may be fixed, and a second end of the conductive spring plate Q5 may be pre-pressed to extend into the gap Q4 and welded together with the first inner end of the conductor 21 and the second inner end of the conductor 22. The conductive spring plate Q5 may have an elastic potential energy for breaking away from the welding spots during short-circuiting. During short-circuiting, because the current is very large, the welding spots are melted in a short time, the heat instantaneously generated can not be dissipated rapidly in addition to the heat capacity at the welding spots being very small, the welding spots may be melted in a short time. And the conductive spring plate Q5 may restore its shape via the elastic potential energy contained therein to overcome the surface tension and external resistant force, so that a high fusing reliability may be ensured accordingly.

In the following, the parts of the current fuse device 200 will be described in detail in combination with the accompanying figures.

Referring to Fig. 9-12, the insulating box Q1 may comprise an upper box Q11 and a lower box Q12. The cavity therein may be formed by enclosing the upper box Q11 and the bottom box Q12 and spaced by the conductors Q2, Q3 and the conductive spring plate Q5 welded together to form two sealing cavities: an upper cavity Q13 and a lower cavity Q14. The conductors Q2, Q3 have grooves Q111, Q121 respectively to provide the inner space for the cavities Q13, Q14 respectively. The conductors Q2, Q3 and the conductive spring plate Q5 welded together may be placed between the grooves Q111, Q121 to achieve the sealing of the upper cavity Q13 and the lower cavity Q14, and the conductive spring plate Q5 may be on one side of the second groove Q121 and may be less wide than the second groove Q121. The height of the lower cavity Q14 may be greater than the height of the upper cavity Q13, so that the conductive spring plate Q5 can be effectively bounced off when short-circuiting and do not interfere with the lower cavity Q14. The upper cover Q11, the conductors Q2, Q3, the conductive spring plate Q5, and the lower cavity Q14 may have a plurality of screws formed thereon and may be tightened by a screw Q6 as shown in Fig. 9, where the first end of the conductive spring plate Q5 may be clamped between the first conductor Q2 and the lower box Q12 for positioning.

The insulating box 1 can be made from high temperature resistance or corrosion resistance materials. Particularly, the materials may be ceramics, asbestos, or polytetrafluoroethylene. Because of the insulating box, the conductors may be fixed and shielded accordingly. And the connection and disconnection of the current fuse device 200 may be more reliable.

Particularly, to achieve arc-extinguishing, an arc-extinguishing medium quartz sand (not shown) may be filled into the upper cavity Q13, so that when the welding spots may be melted and the connection may be broken by conductive spring plate Q5, the quartz sand under gravity may flow from the upper cavity Q13 into the lower cavity Q14 via the gap Q4, thus resulting in effectively eliminating the effect resulted from arc discharge and eliminating the high temperature arc discharge hidden problems while enhancing disconnection stability. Certainly, the arc-extinguishing medium may be any other materials with similar function. According to the present embodiment, a screw hole Q112 penetrating through the upper cavity Q13 may be located on a side wall of the upper box Q11, the quartz sand may be filled into the upper cavity Q13 via the screw hole Q112, and after the quartz sand being filled in, the screw hole Q112 may be sealed and fixed by a screw (not shown).

Particularly, the conductive spring plate Q5 may be made from copperplated spring steel plate with excellent elasticity whereas slightly poor electrical conductivity. In the example, a cross section of the conductive spring plate Q5 may be of a "L" shape and includes a long side Q52 and a short side Q51. The second end of the conductive spring plate Q5 may be the short side Q51 which may be pre-pressed to be extended into the gap Q4 and welded together with the first inner end and the second inner end of the conductors Q2 and Q3. Under natural conditions, the long side Q52 may be bended toward the outer side of the conductive spring plate Q5, so that when the short side Q51 may be welded into the gap Q4, an elastic potential energy making the conductive spring plate Q5 move towards the lower cavity Q14 may be stored on the long side Q52. During short-circuiting, the welding spots may be melted, the elastic potential energy may be released and the short side Q51 may be thoroughly broken away from the gap Q4 to achieve the reliable connection.

Particularly, the conductors Q2, Q3 may be made from copper plates, and screw holes Q21, Q31 may be formed on the conductors Q2, Q3 respectively for fixing the screw Q6, mounting holes Q22, Q32 may be formed on the outer ends of the conductors Q2, Q3 respectively for connecting the whole current fuse device with single batteries, and the first inner end and the second inner end of the conductors Q2, Q3 may be formed into trapezoid shapes with shorter parallel sides thereof being opposing with each other. The trapezoidal shapes may properly increase the resistance between the first conductor Q2 and the second conductor Q3, as well as increase the temperature of the welding spots while short-circuiting to accelerate the melting of the welding spots.

The current fuse device according to the embodiment may be rapidly fused during short-circuiting. And the current fuse device may minimize the damage of the short circuit to the batteries. Further, the production and maintenance thereof may be facilitated due too the design as described above, while meeting requirements of overcurrent in normal state, thus possessing a certain overloading capacity. Because the heat generated by the welding spots of the current fuse device has enough time to be transmitted through the conductors Q2, Q3 to the single batteries and a heat controlling system, and a part of the heat is absorbed by the arc-extinguishing medium, such as quartz sand etc., the temperature of the welding spots may be substantially the same as that of the conductors Q2, Q3, so that the welding spots and the conductors Q2, Q3 may be deemed as an integral part with low resistance, thus having enhanced overcurrent capacity. Because the current during short-circuiting is much larger, the amount of the heat from the welding spots may be increased by about 10 times. A large amount of heat can not be dissipated instantaneously, and because the mass of the welding spots are much lower than that of the conductors Q2, Q3 and quartz sand, the heat capacity of the spring plates are very low, so that the temperature of the welding spots may be increased rapidly to reach the melting point of the welding spots, the welding spots may be melted, and the spring plates Q5 may spring back into the upper cavity 13.

The current fuse device may be an independent structure which may increase the maneuverability in the production and maintenance.

The current fuse device 200 according to an embodiment of the present disclosure and test thereof may be provided as following:
The conductors Q2, Q3 may be made from T2 copper plates having a conductive sectional size of about 1.7 mmx40 mm and 2 mmx40 mm respectively, the distance of the welding joint (i.e. the gap Q4) therebetween may be about 1.5mm, and the conductive spring plate Q5 may have a conductive sectional size of about 15mm x 1.7 mm with a thickness of about 0.4 mm.

The resistance of the current fuse device 200 may be about 0.1 to 0.13 milliohm. The resistance of the welding joint may be about 0.04 to 0.05 milliohm; and the resistances may be adjusted by changing the size and thickness of the conductors Q2, Q3 or conductive spring plate Q5.

Under the condition of an overloading current of 350A, the current fuse device 200 can at least provide a safe time of about 15 minutes. Under the condition of an overloading current of 1000A, the breaking time of the current fuse device 200 may be just about 18 to 20 seconds. When two single batteries may be used for testing, the average current may be about 1023 A in the early 20 seconds during short-circuiting, so that the response time of the current fuse device may meet the requirements of short circuit protection.

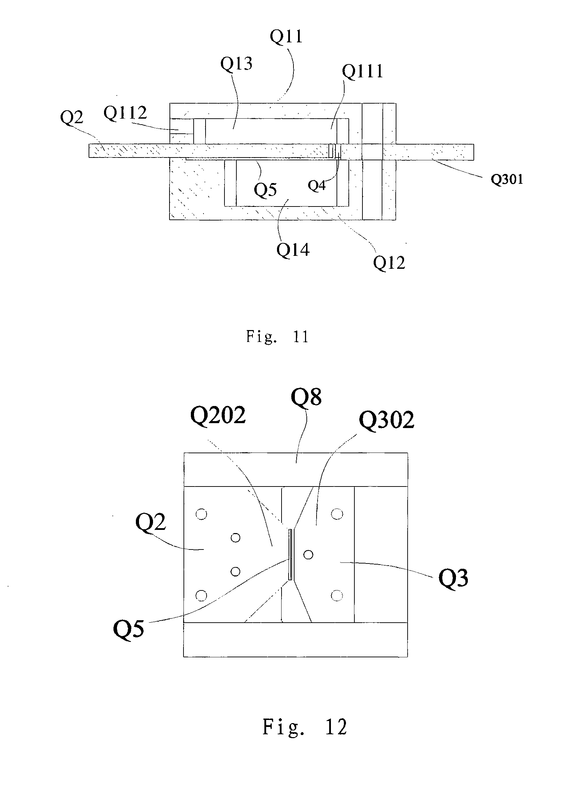

Referring to Figs. 9 and 12, the current fuse device 200 may be produced by the following steps:
1) clamping the conductors Q2, Q3 and the conductive spring plates Q5 pre-pressed and elastically deformed on a fixture Q8 according to Fig. 12, pressing the long side Q52 to be flat with the short side Q51 being extended into the gap Q4 between the conductors Q2, Q3;
2) coating a solder paste into the gap Q4 uniformly and covering the short side Q51 with the solder paste, and then completing the welding by a welding equipment, thus integrating the conductors Q2, Q3 with the conductive spring plate Q5 accordingly; and
3) providing the conductors Q2, Q3 and the conductive spring plate Q5 integrally formed by welding between the upper box Q11 and lower box Q12 and tightening them via a screw Q6, filling quartz sand into the upper cavity 13 via a screw hole Q112 on the side of the upper box Q11, and finally sealing the current fuse device with a screw.

Because the present disclosure adopts an independent design, the production of the current fuse device may be formed separately, and manufactured in batch independently, thus the producing efficiency may be enhanced whereas the cost thereof may be lowered with consistent product quality. Further, the operability for manufacturing and maintaining the current fuse device may be improved accordingly.

As shown in Fig. 2, a battery assembly may be provided which may comprise a plurality of single batteries, at least two of the single batteries may be electrically connected with each other via the current fuse device as described above.

## Claims

1. A current fuse device (100) comprising:
an insulating box having a cavity;
a first conductor (21) fixed by the insulating box with a first outer end projecting out of the insulating box and a first inner end (211) in the cavity;
a second conductor (22) fixed by the insulating box with a second outer end (221) projecting out of the insulating box and a second inner end provided in the cavity which is opposed to the first inner end of the first conductor;
elastic members (31, 32) provided on the first conductor and the second conductor inside the cavity forming electrical connection with the first and second inner ends simultaneously, wherein the elastic members have an elastic potential energy to break the electrical connection during short-circuiting;
the elastic members are formed into a first conductive spring plate (31) and a second conductive spring plate (32);
an end of the first conductive spring plate is fixed to and electrically connected with the first inner end (211);
an end of the second conductive spring plate is fixed to and electrically connected with the second inner end (221);
the other ends of the first and second conductive spring plates are connected together via welding spots;
and at least one of the first conductive spring plate and the second conductive spring plate has the elastic potential energy for breaking away from welding spots during short-circuiting;
and each of the first and the second conductive spring plates comprises at least two branch spring plates.

2. The current fuse device according to claim 1, wherein the first conductor and the first conductive spring plate are integrally formed, and the second conductor and the second conductive spring plate are integrally formed.

3. The current fuse device according to claim 1, wherein the first and second conductors have thicknesses larger than those of the first conductive spring plate and second conductive spring plate respectively.

4. The current fuse device according to claim 1, wherein the ratios of the resistance of the first and second conductive spring plates to the resistance of the first and second conductors range from about 1.5 to about 2.5

5. The current fuse device according to claim 1, wherein the conductive spring plate is made of beryllium copper alloy.

6. The current fuse device according to claim 1, wherein the insulating box comprises: a main body; an upper cover; and a lower cover to be mated with the upper cover, wherein the upper cover and lower cover are fixed to the main body to form the cavity; and the first and second conductors are fixed between the upper cover and the main body.

7. The current fuse device according to claim 1 , wherein a gap is formed between the first inner end and the second inner end with the elastic member having a first end being fixed and a second end being provided in the gap which forms the electrical connection with the first inner end and the second inner end simultaneously.

8. The current fuse device according to claim 7, wherein the elastic member is a conductive spring plate having a cross section of a "L" shape including a long side and a short side, and the second end of the conductive spring plate is the short side.

9. The current fuse device according to claim 7, wherein the first inner end and the second inner end are formed into trapezoid shapes with shorter parallel sides thereof being opposing with each other.

10. The current fuse device according to claim 7, wherein the insulating box comprises: an upper box; and a bottom box which is connected with the upper box to form the cavity.

11. The current fuse device according to claim 1, wherein the electrical connection is formed by welding.

12. The current fuse device according to claim 1, wherein the cavity has arc-extinguishing medium being filled therein.

13. A battery assembly comprising a plurality of single batteries, wherein at least two of the single batteries are electrically connected with each other via the current fuse device according to claim 1.

## Patentansprüche

1. Stromsicherungsgerät (100), umfassend:
einen Isolierkasten mit einem Hohlraum;
einen ersten Leiter (21), der durch den Isolierkasten mit einem ersten Außenende vorstehend aus dem Isolierkasten und einem ersten Innenende (211) im Hohlraum befestigt ist;
einen zweiten Leiter (22), der durch den Isolierkasten mit einem zweiten Außenende (221) vorstehend aus dem Isolierkasten und einem zweiten Innenende, das dem ersten Innenende des ersten Leiters gegenüberliegt im Hohlraum befestigt ist;
elastische Glieder (31, 32), die am ersten Leiter und am zweiten Leiter innerhalb des Hohlraums vorgesehen sind und elektrische Verbindung mit dem ersten und zweiten Innenende gleichzeitig ausbilden, wobei die elastischen Glieder eine elastische Lageenergie zum Unterbrechen der elektrischen Verbindung während Kurzschlusses aufweisen;
wobei die elastischen Glieder zu einem ersten leitfähigen Federblatt (31) und einem zweiten leitfähigen Federblatt (32) ausgebildet sind;
wobei ein Ende des ersten leitfähigen Federblatts am ersten Innenende (211) befestigt und elektrisch damit verbunden ist;
wobei ein Ende des zweiten leitfähigen Federblatts am zweiten Innenende (221) befestigt und elektrisch damit verbunden ist;
wobei die anderen Enden des ersten und zweiten leitfähigen Federblatts über Schweißpunkte miteinander verbunden sind;
und wobei zumindest eines des ersten leitfähigen Federblatts und des zweiten leitfähigen Federblatts die elastische Lageenergie zum Wegbrechen von den Schweißpunkten während Kurzschlusses aufweist;
und wobei jedes des ersten leitfähigen Federblatts und des zweiten leitfähigen Federblatts zumindest zwei Zweigfederblätter umfasst.

2. Stromsicherungsgerät nach Anspruch 1, wobei der erste Leiter und das erste leitfähige Federblatt einstückig ausgebildet sind und der zweite Leiter und das zweite leitfähige Federblatt einstückig ausgebildet sind.

3. Stromsicherungsgerät nach Anspruch 1, wobei der erste und zweite Leiter Stärken aufweisen, die größer als jene des ersten leitfähigen Federblatts bzw. zweiten leitfähigen Federblatts sind.

4. Stromsicherungsgerät nach Anspruch 1, wobei die Verhältnisse des Widerstands des ersten und zweiten leitfähigen Federblatts zum Widerstand des ersten und zweiten Leiters im Bereich von ungefähr 1,5 bis ungefähr 2,5 liegen.

5. Stromsicherungsgerät nach Anspruch 1, wobei das leitfähige Federblatt aus Beryllium-Kupfer-Legierung hergestellt ist.

6. Stromsicherungsgerät nach Anspruch 1, wobei der Isolierkasten Folgendes umfasst: einen Hauptkörper; eine obere Abdeckung; und eine untere Abdeckung zum Zusammenpassen mit der oberen Abdeckung, wobei die obere Abdeckung und untere Abdeckung zum Ausbilden des Hohlraums am Hauptkörper befestigt sind; und wobei der erste und zweite Leiter zwischen der oberen Abdeckung und dem Hauptkörper befestigt sind.

7. Stromsicherungsgerät nach Anspruch 1, wobei ein Spalt zwischen dem ersten Innenende und dem zweiten Innenende ausgebildet ist, wobei das elastische Glied ein erstes Ende, das befestigt ist, und ein zweites Ende aufweist, das im Spalt vorgesehen ist, welches die elektrische Verbindung mit dem ersten Innenende und dem zweiten Innenende gleichzeitig ausbildet.

8. Stromsicherungsgerät nach Anspruch 7, wobei das elastische Glied ein leitfähiges Federblatt mit einem Querschnitt in "L"-Form ist, die eine lange Seite und eine kurze Seite enthält, und das zweite Ende des leitfähigen Federblatts die kurze Seite ist.

9. Stromsicherungsgerät nach Anspruch 7, wobei das erste Innenende und das zweite Innenende zu Trapezformen ausgebildet sind, wobei kürzere parallele Seiten davon einander gegenüberliegen.

10. Stromsicherungsgerät nach Anspruch 7, wobei der Isolierkasten Folgendes umfasst: einen oberen Kasten; und einen unteren Kasten, der mit dem oberen Kasten zum Ausbilden des Hohlraums verbunden ist.

11. Stromsicherungsgerät nach Anspruch 1, wobei die elektrische Verbindung durch Schweißung ausgebildet ist.

12. Stromsicherungsgerät nach Anspruch 1, wobei der Hohlraum ein bogenlöschendes Medium aufweist, das dort hineingefüllt ist.

13. Batterieanordnung, umfassend mehrere einzelne Batterien, wobei zumindest zwei der einzelnen Batterien über das Stromsicherungsgerät nach Anspruch 1 elektrisch miteinander verbunden sind.

## Revendications

1. Dispositif de fusible pour courant (100) comprenant :
un boîtier isolant ayant une cavité ;
un premier conducteur (21) fixé par le boîtier isolant avec une première extrémité extérieure faisant saillie à l'extérieur du boîtier isolant et une première extrémité intérieure (211) dans la cavité ;
un deuxième conducteur (22) fixé par le boîtier isolant avec une deuxième extrémité extérieure (221) faisant saillie à l'extérieur du boîtier isolant et une deuxième extrémité intérieure prévue dans la cavité qui est opposée à la première extrémité intérieure du premier conducteur ;
des éléments élastiques (31, 32) prévus sur le premier conducteur et le deuxième conducteur à l'intérieur de la cavité formant une connexion électrique avec les première et deuxième extrémités intérieures simultanément, où les éléments élastiques ont une énergie potentielle élastique pour interrompre la connexion électrique au cours d'un court-circuit ;
les éléments élastiques sont formés dans une première plaque à ressort conductrice (31) et une deuxième plaque à ressort conductrice (32) ;
une extrémité de la première plaque à ressort conductrice est fixée à la première extrémité intérieure (211) et électriquement reliée à celle-ci ;
une extrémité de la deuxième plaque à ressort conductrice est fixée à la deuxième extrémité intérieure (221) et électriquement reliée à celle-ci ;
les autres extrémités des première et deuxième plaques à ressort conductrices sont reliées entre elles par l'intermédiaire de points de soudure ;
et au moins l'une de la première plaque à ressort conductrice et de la deuxième plaque à ressort conductrice a l'énergie potentielle élastique pour se détacher des points de soudure au cours d'un court-circuit ;
et chacune des première et deuxième plaques à ressort conductrices comprend au moins deux plaques à ressort de ramification.

2. Dispositif de fusible pour courant selon la revendication 1, dans lequel le premier conducteur et la première plaque à ressort conductrice sont formés, et le deuxième conducteur et la deuxième plaque à ressort conductrice sont formés.

3. Dispositif de fusible pour courant selon la revendication 1, dans lequel les premier et deuxième conducteurs présentent des épaisseurs plus grandes que celles de la première plaque à ressort conductrice et de la deuxième plaque à ressort conductrice respectivement.

4. Dispositif de fusible pour courant selon la revendication 1, dans lequel les rapports de la résistance des première et deuxième plaques à ressort conductrices sur la résistance des premier et deuxième conducteurs varient entre environ 1,5 et environ 2,5.

5. Dispositif de fusible pour courant selon la revendication 1, dans lequel la plaque à ressort conductrice est réalisée en alliage de cuivre et de béryllium.

6. Dispositif de fusible pour courant selon la revendication 1, dans lequel le boîtier isolant comprend : un corps principal ; un couvercle supérieur ; et un couvercle inférieur à accoupler au couvercle supérieur, où le couvercle supérieur et le couvercle inférieur sont fixés au corps principal pour former la cavité ; et les premier et deuxième conducteurs sont fixés entre le couvercle supérieur et le corps principal.

7. Dispositif de fusible pour courant selon la revendication 1, dans lequel un espace est formé entre la première extrémité intérieure et la deuxième extrémité intérieure avec l'élément élastique ayant une première extrémité étant fixée et une deuxième extrémité étant prévue dans l'espace qui forme la connexion électrique avec la première extrémité intérieure et la deuxième extrémité intérieure simultanément.

8. Dispositif de fusible pour courant selon la revendication 7, dans lequel l'élément élastique est une plaque à ressort conductrice ayant une section transversale d'une forme "L" comportant un côté long et un côté court, et la deuxième extrémité de la plaque à ressort conductrice est le côté court.

9. Dispositif de fusible pour courant selon la revendication 7, dans lequel la première extrémité intérieure et la deuxième extrémité intérieure sont de forme trapézoïdale avec les côtés parallèles les plus courts de celles-ci étant opposés les uns aux autres.

10. Dispositif de fusible pour courant selon la revendication 7, dans lequel le boîtier isolant comprend : un boîtier supérieur ; et un boîtier inférieur qui est relié au boîtier supérieur pour former la cavité.

11. Dispositif de fusible pour courant selon la revendication 1, dans lequel la connexion électrique est formée par soudage.

12. Dispositif de fusible pour courant selon la revendication 1, dans lequel la cavité a un milieu d'extinction d'arc qui est rempli dans celle-ci.

13. Ensemble de batteries comprenant une pluralité de batteries uniques, dans lequel au moins deux parmi les batteries uniques sont reliées électriquement entre elles par l'intermédiaire du dispositif de fusible pour courant selon la revendication 1.
